# EUROPEAN PATENT APPLICATION

(11) **EP 1 990 983 A1**
(43) Date of publication of application: **12.11.2008**
(21) Application number: 08008215.9
(22) Date of filing: 29.04.2008
(51) Int. Cl.: H04M 3/533

(54) **Method, system and mobile service device for notifying missing-call**

(30) Priority: 08.05.2007 CN 200710099009; 10.03.2008 WO PCT/CN2008/070454
(71) Applicant: Huawei Technologies Co., Ltd., Longgang District, Shenzhen Guangdong 518129 (CN)
(72) Inventor: Yu, Qingping, Shenzhen Guangdon Province 518129 (CN)
(74) Representative: Pfenning, Meinig & Partner GbR

(57) **Abstract**

A missing-call notifying method, including: calling a called party by a calling party, and when the called party is unconnectable, obtaining a calling request sent by the calling party to the called party; recording missing-call information of the calling party; generating a notification message according to the missing-call information; and sending the notification message to the called party. A missing-call notifying system, including: a detecting unit, a phone message prompting unit, a storing unit and a mobile service unit. A mobile service device, including: a notification message generating module and a notification message sending module. In the present invention, the notification message containing the phone message left by the calling party is sent to the called party, so that the called party may obtain the communication object of the calling party after power on in time. Thus, great convenience is brought about for the subscriber.

## Description

The present application claims the priorities of CN Application No. 200710099009.2 filed on May 8, 2007, titled "METHOD, SYSTEM AND MOBILE SERVICE DEVICE FOR NOTIFYING MISSING-CALL" and PCT Application PCT/CN2008/070454 filed on March 10, 2008, titled "METHOD, SYSTEM AND MOBILE SERVICE DEVICE FOR NOTIFYING MISSING-CALL", whose contents are incorporated herein by reference in their entirety.

### Field of the Invention

The present invention relates to the technical field of mobile communications, and in particular, to a method, system and mobile service device for notifying missing-call.

### Background of the Invention

Multimedia Messaging Service, which is also called MMS, is a further development of the Short Message Service (SMS) and Extend Message Service (EMS). The MMS provides the personal multimedia application communication service with a complete end-to-end solution.

A multimedia message includes image, audio, video, data, and so on. The MMS covers the multimedia message communication from terminal to terminal, from terminal to application and from application to terminal. The multimedia message implements not only the message transfer between terminals as well as between terminal and application, but also the diversity of contents, where the content form includes various combinations of picture, voice, image, data and text.

In a mobile communication network, because a called party is power off, out of service, or busy, etc., a calling party may not be connected to the called party. Thus, the call information may be lost. With respect to such situation, a missing-call notifying service is provided in the prior art. For a subscriber who has activated the missing-call notifying service, when a call from the calling party cannot be put through, the call may be forwarded to a missing-call notifying system in a forwarding mode. The system platform informs the calling party that the called party has activated the missing-call notifying service, and then sends the telephone number of the calling party to the mobile phone of the called party.

When applying the missing-call notifying service, only the telephone number of the calling party, whose call was not put through, is sent to the called party. Only when the called party calls back, the reason why the calling party made the call can be known. It is not beneficial for the called party to obtain the object of the calling party to make the call in time, thus causing inconvenience for the subscriber.

### Summary of the Invention

The embodiments of the present invention provide a method, a system and a mobile service device for notifying missing-call.

An embodiment of the present invention provides a missing-call notifying method, including:

calling a called party by a calling party, and when the called party is unconnectable, obtaining a calling request sent by the calling party to the called party;

recording a phone message left by the calling party and missing-call information;

generating a notification message according to the phone message left and the missing-call information; and

sending the notification message to the called party.

An embodiment of the present invention provides a missing-call notifying system, including: a detecting unit, which is adapted to obtain call information of a calling party, and detect whether a called party is connectable according to the call information;

a storing unit, which is adapted to record missing-call information and store a phone message left by the calling party; and

a mobile service unit, which is adapted to generate a notification message according to the left phone message and the missing-call information stored in the storing unit, and send the notification message to the called party, when the detecting unit detects that the called party is unconnectable.

An embodiment of the present invention provides a mobile service device, including:

a notification message generating module, adapted to obtain missing-call information and a phone message left by a calling party, and generate a notification message according to the phone message left by the calling party and the missing-call information; and

a notification message sending module, adapted to send the notification message generated by the notification message generating module to a called party.

In the embodiments of the present invention, a calling party phone message leaving function is added on the basis of the original missing-call notifying system. Thus, the called party may receive the notification message containing the phone message left by the calling party in time when the called party is power on. The reason why the calling party made the call may be obtained without the necessity of making a call to the calling party again. Therefore, it is convenient for the subscribers of the missing-call notifying system.

### Brief Description of the Drawings

Figure 1 is a flow chart of the missing-call notifying method provided according to a first embodiment of the present invention;

Figure 2 is a schematic diagram showing an information exchange according to the first embodiment of the present invention;

Figure 3 is a diagram showing a structure of a missing-call notifying system according to a second embodiment of the present invention; and

Figure 4 is a diagram showing a structure of a mobile service device according to a third embodiment of the present invention.

### Detailed Description of the Embodiments

In order to make the object, technical scheme and advantages of the present invention clearer, the embodiments of the present invention will be further illustrated hereinafter in combination with drawings.

In the embodiments of the present invention, on the basis of an original missing-call notifying system, a calling party phone message leaving function is added. A notification message is generated with the missing-call information and the left phone message, and sent to the called party. The called party fetches the left phone message in the notification message, and gets the reason why the calling party made the call.

### Embodiment I

In the present embodiment, the called party has activated the missing-call notifying service. The communication terminal device may be a mobile phone, a fixed-line telephone or a Personal Handy phone System (PHS).

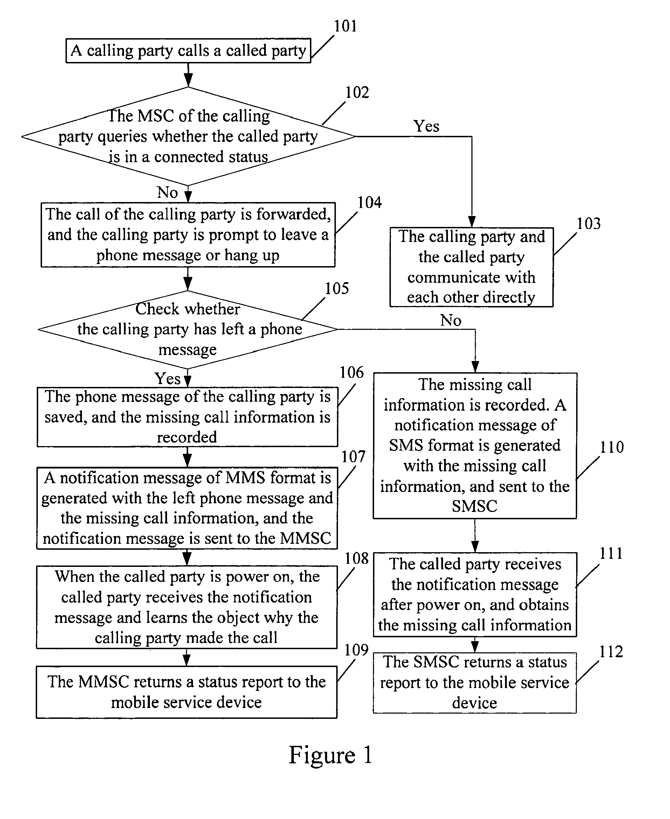

As shown in Figure 1, the embodiment of the present invention provides a missing-call notifying method, which includes following specific processes:

Process 101: A calling party calls a called party via a communication terminal device.

Process 102: A switching device on the calling party side, such as Mobile Switch Center (MSC), queries the status of the called party in the Home Location Register (HLR) of the called party according to call information of the calling party, and determines whether the called party is in a connected status. If the called party is in the connected status, Process 103 is executed; otherwise, Process 104 is executed.

When the called party is out of service, busy, power off, or cannot receive the call due to other reasons, the called party is in an unconnectable status.

Process 103: The calling party and the called party communicate with each other directly.

Process 104: The call of the calling party is forwarded, and the calling party is prompt to leave a phone message or hang up.

The forwarding process is specifically as follows:

When the called party is in the unconnectable status, the HLR of the called party takes a missing-call notifying access number as a forward number, and returns the forward number to the MSC of the calling party.

The MSC of the calling party connects the call to the mobile service device according to the forward number returned by the HLR of the called party.

The mobile service device displays a voice prompt to the calling party, informs the calling party that the called party has activated the missing-call notifying service, and guides the calling party to leave a phone message or hang up. For example, the mobile service device may prompt that "Press 1 for leaving a phone message. When you hang up directly, your telephone number will be sent to the called party".

Process 105: It is checked whether the calling party has left a phone message. If the calling party has left a phone message, Process 106 is executed; otherwise, Process 110 is executed.

In the present embodiment, when the calling party knows that the called party is unconnectable, the calling party leaves a phone message and explains the reason for making the call.

Process 106: The phone message of the calling party is saved, and the missing-call information is recorded.

The mobile service device may record the missing-call information in a database. The missing-call information specifically includes: telephone number of the calling party, calling time, dialing numbers, path of the left phone message, etc. The left phone message is saved in a file server, and the format of the left phone message may be MP3, vox, wav, etc.

Process 107: A notification message of MMS format is generated with the phone message left by the calling party and the missing-call information, and the notification message is sent to the Multimedia Messaging Service Center (MMSC).

The notification message of MMS format here may be generated with a manner of predefined MMS format message, or may be generated with a configurable message format. The parameters in the notification message of MMS format and the explanation of the parameters are illustrated in Table 1.

| **Parameter** | **Explanation** |
|---|---|
| CLI(Calling Line Identification) | Telephone number of the calling party |
| Receiving party number | Telephone number of the called party |
| Date and time of submission (saving) | The time when the calling party calls the called party |
| Message length (in second) | Time length of the phone message left by the party |
| Predefined text | Missing-call notifying message, including telephone number of the calling party, calling time, dailing numbers |
| File address of the phone message | File address of the phone message left by the calling party |

The notification message of MMS format may be generated by filling contents in corresponding table items according to the format shown in Table 1.

Besides the phone message information and the missing-call information, other multimedia part may be added into the notification message automatically. The multimedia element may be any media type supported by the MMS terminal, such as image, automated graphics (GIF) and video (3GP).

Process 108: When the called party is power on, the notification message of MMS format is received. The called party gets the object why the calling party made the call through reading the notification message.

The contents of the notification message may include text information (missing-call information saved in the missing-call notifying system) and voice information.

For example, the text information may be: *The missing-call notifying service prompts you that 1xxxxxxxxxx called you at x*/*x*/*x*/*x*/*x (year*/*month*/*day*/*hour*/*minute).* The voice information may be: *The phone message information of a calling party.*

Process 109: The MMSC returns a status report to the mobile service device.

The status report is adapted to inform the mobile service device that the called party has received the phone message left by the calling party. The mobile service device deletes the missing-call information and saved phone message of this missing-call record.

Process 110: The missing-call information is recorded. A notification message of SMS format is generated with the missing-call information, and sent to the Short Message Service Center (SMSC).

Process 111: The called party receives the notification message after power on, and obtains the missing-call information according to the notification message.

Process 112: The SMSC returns a status report to the mobile service device.

This status report is to inform the mobile service device that the called party has received the missing-call information. The mobile service device will delete the missing-call information of this missing-call record.

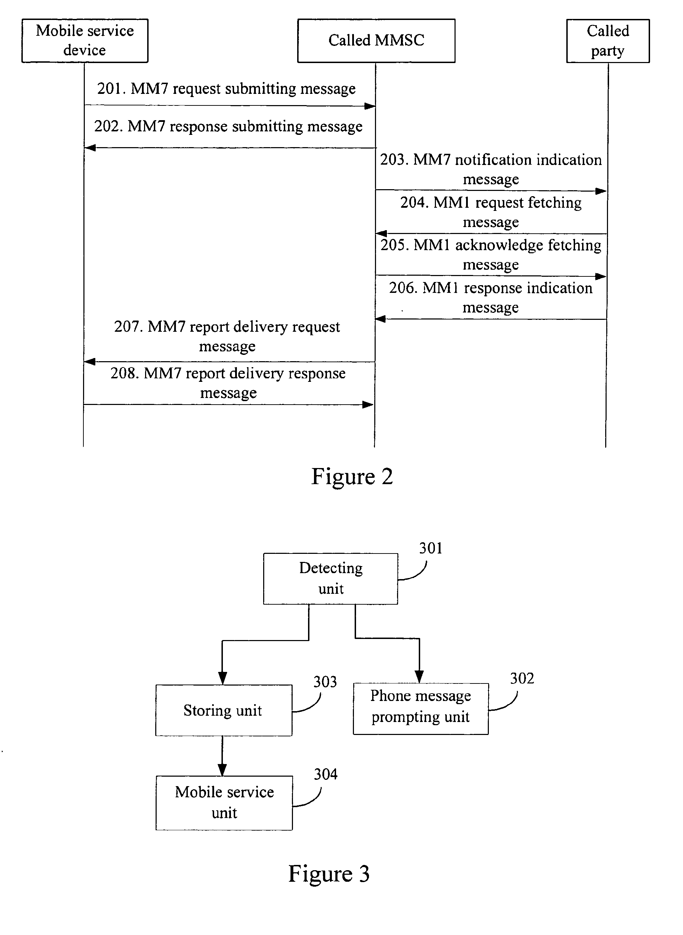

As shown in Figure 2, the MMSC of the called party informs the called party of the message exchange process. This is disclosed in the prior art and will be briefly introduced as follows:

Process 201: The mobile service device submits a generated notification message of MMS format to the MMSC of the called party with a MM7 request submitting message. Here the MM7 refers to a standard protocol for transmitting a multimedia message (a protocol between the SP and the MMSC).

Process 202: When receiving the notification message of MMS format, the MMSC of the called party returns a received response message with a MM7 response submitting message.

Process 203: The MMSC of the called party informs the called party that there is a multimedia message through an MM7 notification indication message.

Process 204: When receiving the notification, the called party requests to download the new multimedia message through an MM 1 request fetching message.

Process 205: The MMSC of the called party sends the saved phone message to the called party through an MM 1 acknowledge fetching message.

Process 206: When receiving the phone message, the called party returns the information that the phone message is received to the MMSC of the called party through an MM1 response indication message.

Process 207: The called party sends a status report to the mobile service device through an MM7 report delivery request message.

Process 208: When receiving the status report, the mobile service device returns a status report response through an MM7 report delivery response message.

### Embodiment II

As shown in Figure 3, an embodiment of the present invention further provides a missing-call notifying system, which specifically includes: a detecting unit 301, a phone message prompting unit 302, a storing unit 303 and a mobile service unit 304.

The detecting unit 301 is adapted to receive the number called by a calling party, and detect whether the called party is connectable according to the called number. When the called party is unconnectable, the detecting unit 301 forwards the call of the calling party.

The phone message prompting unit 302 is adapted to prompt the calling party to leave a phone message when the detecting unit 301 determines that the called party is unconnectable.

The storing unit 303 is adapted to record the missing-call information and store the phone message left by the calling party when the detecting unit 301 determines that the called party is unconnectable.

The mobile service unit 304 is adapted to generate a notification message according to the left phone message and missing-call information stored in the storing unit 303, and send the notification message to the called party.

The detecting unit may be the MSC of the calling party, and the MSC of the calling party detects the status information of the called party. The calling party and the called party may be mobile terminals such as mobile phones and PHS, or may be fixed-line terminals. Furthermore, the called party in the present embodiment has configured the missing-call notifying service.

The processing flow of the missing-call notifying system is specifically as follows:

The calling party calls the called party.

When receiving the number dialed by the calling party, the detecting unit 301 detects whether the called party is connectable.

When the detecting unit 301 determines that the called party is unconnectable, the phone message prompting unit 302 prompts the calling party to leave a phone message.

The calling party leaves a phone message according to the prompt.

When the detecting unit 301 determines that the called party is unconnectable, the storing unit 303 records the missing-call information, and stores the phone message left by the calling party.

The mobile service unit 304 generates a notification message according to the left phone message and missing-call information stored in the storing unit 303, and sends the notification message to the called party.

The notification message generated by the mobile service unit 304 is a notification message of MMS format.

### Embodiment III

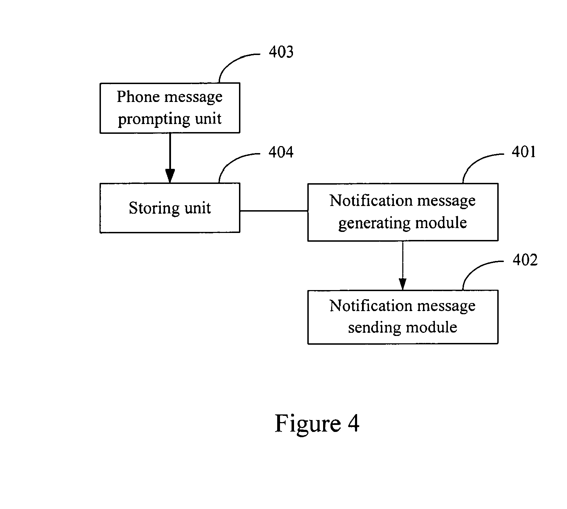

As shown in Figure 4, an embodiment of the present invention further provides a mobile service device, which specifically includes: a notification message generating unit 401 and a notification message sending unit 402.

The notification message generating unit 401 is adapted to obtain the missing-call information, and generate a notification message according to the missing-call information.

The notification message sending unit 402 is adapted to send the notification message generated by the notification message generating unit 401 to the called party.

Furthermore, the phone message prompting unit 403 and the storing unit 404 provided in the above second embodiment may be arranged in the mobile service device, or may be arranged separately. The storing unit 404 is adapted to store the missing-call information and the phone message left by the calling party, and provide the notification message generating unit 401 with the missing-call information and the phone message left by the calling party.

The calling party and the called party may be mobile terminals such as mobile phones and PHS, or may be fixed terminals. Furthermore, the called party in the present embodiment has configured the missing-call notifying service.

The applications of the modules in the mobile service device are as follows:

When the called party is in the unconnectable status, the missing-call information and the phone message left by the calling party are stored in the storing unit 404 or other storing server that is accessible for the mobile service device. The notification message generating unit 401 generates a notification message according to the missing-call information and the left phone message that is received.

When it is detected that the called party is power on, the notification message sending unit 402 sends the generated notification message to the called party.

The notification message of MMS format here may be generated according to a predefined MMS format, or may be generated with a configurable message format. The parameters in the notification message of MMS format and the explanation of the parameters are as shown in Table 1 of the first embodiment.

Besides the phone message information and the missing-call information, other multimedia part may be added into the notification message automatically. The multimedia element may be any media type supported by the MMS terminal, such as image, automated graphics (GIF) and video (3GP).

All the processes or part of the processes in the method described above may be implemented through corresponding hardware controlled by instructions. The instructions may be stored in a storage media, such as the hard disc and memory of the computer or server.

According to the embodiments of the present invention, the original missing-call notifying system is extended through generating a notification message of MMS format with the left phone message and missing-call information. In the method or system for notifying missing-call according to the embodiments of the present invention, the original missing-call information is saved, and furthermore, the phone message information left by the calling party is saved. Thus, the called party may receive the notification message containing the phone message information left by the calling party in time when the called party is connectable. The reason why the calling party made the call may be obtained without the necessity of making a call to the calling party again. Therefore, a communication channel is provided in time for the parties of the missing-call notifying system.

Furthermore, in the embodiments of the present invention, the calling party may be selectively prompted through determining the connection status of the called party. The calling party does not need to leave a phone message each time when the calling party makes a call, so that the practicability of the system is strengthened. In order to enable a called party, who is power off for a relatively long period of time, to receive the left phone message in the missing-call notifying service, the missing-call notifying system according to the embodiments of the present invention provides a storing device for storing the left phone message and the missing-call information, so that the reliability of the system is strengthened, and the called party is able to receive the left phone message information in a missing-call.

Only the preferred embodiments are described above. However, the protection scope of the present invention is not limited thereto. Any modification, substitution and improvement within the spirit and principle of the present invention fall within the protection scope of the present invention.

## Claims

1. A method for notifying missing-call, comprising:
calling a called party by a calling party, and when the called party is unconnectable, obtaining a calling request originated by the calling party to the called party;
recording a phone message left by the calling party and missing-call information;
generating a notification message according to the phone message and the missing-call information; and
sending the notification message to the called party.

2. The method for notifying missing-call according to claim 1, wherein the missing-call information comprises at least one of: a telephone number of the calling party, calling time, dialing numbers and a path for fetching the phone message.

3. The method for notifying missing-call according to claim 1, wherein the notification message specifically comprises:
text information and voice information, wherein the text information is the missing-call information, and the voice information is the phone message left by the calling party.

4. The method for notifying missing-call according to claim 1, wherein after the process of obtaining the calling request sent by the calling party to the called party, the method further comprises:
determining whether the called party is in an unconnectable status; if the called party is in the unconnectable status, the calling party is prompted to leave a phone message.

5. The method for notifying missing-call according to claim 4, wherein the unconnectable status refers to a status of out of service, busy, power off or no response.

6. The method for notifying missing-call according to claim 1, wherein the notification message is a multimedia messaging service (MMS) notification message.

7. A system for notifying missing-call, comprising: a detecting unit, a phone message prompting unit, a storing unit and a mobile service unit, wherein
the detecting unit is adapted to obtain call information of a calling party, and detecting whether a called party is connectable according to the call information;
the storing unit is adapted to record missing-call information and store a phone message left by the calling party; and
the mobile service unit is adapted to generate a notification message according to the left phone message and the missing-call information stored in the storing unit, and send the notification message to the called party, when the detecting unit detects that the called party is unconnectable.

8. The system for notifying missing-call according to claim 7, wherein:
a phone message prompting unit is adapted to prompt the calling party to leave a phone message when the called party is unconnectable; and
when the detecting unit detects that the called party is unconnectable, the phone message prompting unit prompts the calling party to leave a phone message; the storing unit stores the phone message left by the subscriber; the mobile service unit generates the notification message according to the phone message left and the missing-call information stored in the storing unit, and sends the notification message to the called party.

9. A mobile service device, comprising:
a notification message generating module, which is adapted to obtain missing-call information and a phone message left by a calling party, and generate a notification message according to the phone message left by the calling party and the missing-call information; and
a notification message sending module, which is adapted to send the notification message generated by the notification message generating module to a called party.

10. The mobile service device according to claim 9, further comprising:
a phone message prompting unit, which is adapted to prompt the calling party to leave a phone message when the called party is unconnectable.

11. The mobile service device according to claim 9 or 10, further comprising:
a storing unit, which is adapted to store the missing-call information and the phone message left by the calling party, and send the missing-call information and the phone message left by the calling party to the notification message generating module.
